# EUROPEAN PATENT APPLICATION

(11) **EP 4 187 429 A1**
(43) Date of publication of application: **31.05.2023**
(21) Application number: 21461627.8
(22) Date of filing: 30.11.2021
(51) Int. Cl.: G06F 30/12, G06F 30/10

(54) **SYSTEMS AND METHODS FOR TECHNICAL DOCUMENT REVIEW IN COMPUTER AIDED DESIGN (CAD) SYSTEMS WITH EXTERNAL VALIDATION DATA**

(71) Applicant: General Electric Company, Schenectady, NY 12345 (US)
(72) Inventor: DUBBS, Blake Alexander, Greenville, 29615-4614 (US); MACHALICA, Dawid, 02-256 Warszawa (PL); WASIL, Lukasz, 02-256 Warszawa (PL); HONDOWICZ, Michal, 02-256 Warszawa (PL)
(74) Representative: Patpol Kancelaria Patentowa Sp. z o.o.

(57) **Abstract**

There is provided systems and methods to determine a first identifier for first product and manufacturing information (PMI); determine a first computer-aided design (CAD) model comprising a plurality of features; associate a first feature of the plurality of features with the first identifier, wherein the first feature is identified by a second identifier; associate validation data for the first PMI with the second identifier (602, 604, 606); detect selection of the first feature in the CAD model; and in response to the detected selection, provide a graphical indication of the validation data (702).

## Description

### BACKGROUND

The subject matter disclosed herein relates to systems and methods for design and inspection of parts, such as a characteristic accountability and verification (eCAV) system.

Certain design and inspection techniques may be used to create a variety of machinery, including industrial machines. Industrial machines, such as gas turbine systems, may provide for the generation of power. For example, the gas turbine systems typically include a compressor for compressing a working fluid, such as air, a combustor for combusting the compressed working fluid with fuel, and a turbine for turning the combusted fluid into a rotative power. For example, the compressed air is injected into a combustor, which heats the fluid causing it to expand, and the expanded fluid is forced through the gas turbine. The gas turbine may then convert the expanded fluid into rotative power, for example, by a series of blade stages. The rotative power may then be used to drive a load, which may include an electrical generator producing electrical power and electrically coupled to a power distribution grid. Industrial machines and machine parts may be designed for a particular purpose, such as a compressor blade designed to compress air. The machine or part may then be inspected for its ability to fulfill its design purpose. It may be beneficial to improve the design and inspection of machine and machine parts, for example, with an electronic characteristic accountability and verification (eCAV) system.

### SUMMARY OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

Systems and methods for technical document review in computer aided design (CAD) system with external validation are described herein. Techniques described herein may allow for comparison of expected output with CAD data in a straightforward and convenient manner. A CAD model and spreadsheet of validation data may be concurrently shown side-by-side. When a design feature is selected in a CAD software, one or more corresponding rows of validation data may be highlighted in a spreadsheet application. A triple relationship between PMI identifier, balloon, and spreadsheet rows is used to link together PMI objects, CAD objects, and spreadsheet rows. Links between the validation data and balloon numbers and/or PMI object identifiers may be broken (e.g., disassociated) as needed.

Outputs from the systems and methods described herein can be used to check design features by selecting a CAD object and compare its data with external data, e.g., in the form of a spreadsheet listing all characteristics to be validated during inspection. Each spreadsheet row may represent a separate design feature. Every record of external inspection data may comprise validation data including but not limited to: expected nominal dimensions, tolerances, positions, units, and so forth.

Predefined data from an external source (e.g., CAV spreadsheet) may be opened and used to compare a single design feature in a CAD system with data from the external source. The expected value may be highlighted for each corresponding value in the CAD system. An engineer can verify the value, its expected tolerance, the number of occurrences, etc. and fix any issues that are found. Engineers can easily verify specific design features with all its definition attributes by simply selecting a design feature in a CAD model.

According to a first aspect of the invention, there is provided a system comprising at least one processor and memory storing instructions configured to cause the at least one processor to determine a first identifier for first product and manufacturing information (PMI), determine a first computer-aided design (CAD) model, wherein the CAD model comprises a model of a component or part thereof having a plurality of features, associate a second identifier of a first feature of the plurality of features with the first identifier, associate validation data for the first PMI with the second identifier, determine selection of the first feature in the CAD model, and provide a graphical indication of the validation data based at least in part on the selection of the first feature.

According to a second aspect of the invention, there is provided a computer-implemented method for technical document review in CAD systems with external validation, comprising determining a first identifier for first product and manufacturing information (PMI), determining a first computer-aided design (CAD) model comprising a plurality of features, associating a first feature of the plurality of features with the first identifier, wherein the first feature is identified by a second identifier, associating validation data for the first PMI with the second identifier, detecting selection of the first feature in the CAD model, and in response to the detected selection, providing a graphical indication of the validation data.

According to a third aspect of the invention, there is provided a system comprising at least one processor and memory configured to cause the at least one processor to determine a first file associated with a computer-aided design (CAD) model of at least one component, the at least one component comprising a plurality of features, wherein the first file comprises at least a first annotation encoding a set of characteristics of a first feature of the plurality of features, execute an electronic characteristic accountability and verification (eCAV) system to generate a second file based on a set of product and manufacturing information (PMI) data associated with the CAD model, wherein the second file comprises a set of annotation-specific entries, associate the first annotation with first product manufacturing information (PMI) data, wherein the first annotation corresponds to a first design feature of the CAD model and comprises one or more characteristics of the first design feature, associate the first annotation to a first annotation-specific entry of the set of annotation-specific entries, wherein the first annotation-specific entry comprises one or more expected characteristics of the first feature, detect selection of the first feature in a CAD application, and provide, using the first annotation-specific entry, a graphical indication of the one or more expected characteristics.

It will be appreciated that the use of the terms "first" and "second", and the like, in this patent specification is merely intended to help distinguish between similar features (e.g. the first and second limb portions, etc.), and is not intended to indicate the relative importance of one feature over another feature, unless otherwise specified.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

FIG. 1 is a block diagram of an embodiment of a computer-aided technology (CAx) system.
FIG. 2 is a block diagram of embodiments of certain components of the CAx system of FIG. 1.
FIG. 3 is block diagram of an embodiment of an industrial system that may be conceived, designed, engineered, manufactured, and/or service and tracked by the CAx system of FIG. 1.
FIG. 4 is a flowchart of an embodiment of a process suitable for incorporating one or more callouts (e.g., CAV data) into a CAD model.
FIG. 5 is a block diagram of embodiments in which dynamic linking of balloon, spreadsheet, and PMI information is implemented.
FIG. 6 is a first screenshot of an embodiment of a graphical user interface suitable for technical documentation review in CAD system with external validation data.
FIG. 7 is a second screenshot of an embodiment of a graphical user interface suitable for technical documentation review in CAD system with external validation data.
FIG. 8 is a third screenshot of an embodiment of a graphical user interface suitable for technical documentation review in CAD system with external validation data.

The figures are not necessarily to scale, and certain features and certain views of the figures may be shown exaggerated in scale or in schematic form in the interests of clarity and conciseness.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Designing a machine or component or part may include certain systems and methods described in more detail below that produce a design for a part or product. For example, the design may be created as a model-based definition included in a 3-dimensional (3D) computer aided design (CAD) model and associated product and manufacturing information (PMI). The techniques described herein may not create typical engineering part drawing or drawings, as the CAD model and PMI may contain all part dimensional and tolerance information, as further described below. In various embodiments, a triple relationship between PMI identifier, balloon, and eCAV validation data provides for greater ease in the inspection and validation of CAD model designs. When a balloon is selected in the CAD application, one or more corresponding rows of the opened spreadsheet document are opened, based on the links established through triple relationship between PMI identifier, balloon, and spreadsheet rows. For example, selection of one balloon in a CAD model may result in multiple spreadsheet rows being highlighted, visually depicting both the number of units expected as well as expected nominal dimensions, tolerances, and so forth.

During design, a characteristic accountability and verification (eCAV) system may create a number of callouts (also called balloons or bubbles) associated with specific PMI annotation objects to identify the objects as inspection items. The eCAV system may then generate a characteristic accountability and verification document that lists each of these inspection items with their nominal values, plus/minus tolerances, units, critical-to-quality (CTQ) types, and other details suitable for use by an inspection operator and/or inspection system. The eCAV system may save time by automatically identifying inspection items, and save time by automatically creating the characteristic accountability and verification (CAV) document. Design features of a CAD model may be linked to validation data of a CAV document, which may be organized as rows of a spreadsheet that include various inspection items for a feature, such as expected nominal dimensions, tolerances, and so forth. The eCAV system may also prevent re-work of callout definitions and CAV documents in manufacturing, decrease quality issues due to mistyping, and keep data relative to its original definition model. Using techniques described in this disclosure, expected output may be quickly and efficiently compared with CAD data. When a balloon is selected in the CAD application, one or more corresponding rows of the opened spreadsheet document are opened, based on the links established through a triple relationship between PMI identifier, balloon, and spreadsheet rows. For example, selection of one balloon in a CAD model may result in multiple spreadsheet rows being highlighted, visually depicting both the number of instances expected as well as expected nominal dimensions, tolerances, and so forth. Design validation is therefore simplified in a straightforward and convenient manner.

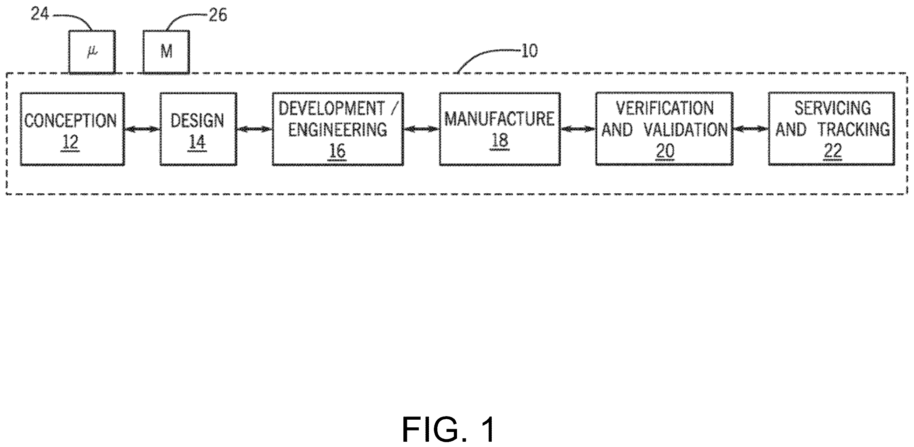

With the foregoing in mind, it may be useful to describe a computer-aided technologies (CAx) system that may incorporate the techniques described herein, for example suitable for executing one or more product lifecycle management (PLM) processes. Accordingly, FIG. 1 illustrates an embodiment of a CAx system 10 suitable for providing for a variety of processes, including PLM processes 12, 14, 16, 18, 20, 22. In the depicted embodiment, the CAx system 10 may include support for execution of conception processes 12. For example, the conception processes 12 may produce a set of specifications such as requirements specifications documenting a set of requirements to be satisfied by a design, a part, a product, or a combination thereof. The conception processes 12 may also produce a concept or prototype for the part or product (e.g., machinery, electronics, structures, or a combination thereof). A series of design processes 14 may then use the specifications and/or prototype to produce, for example, one or more 3D design models of the part or product. The 3D design models may include solid/surface modeling, parametric models, wireframe models, vector models, non-uniform rational basis spline (NURBS) models, geometric models, and the like, describing part geometries and structures. The PMI may include geometric dimensions, tolerances, text (e.g., annotations, notes), other dimensions, material type, material specifications, finishes (e.g., surface finishes), clearances, and so on, associated with the 3D models.

A characteristic accountability and verification (eCAV) system may be used to may create a number of callouts (also called balloons or bubbles) associated with specific PMI annotation objects to identify the objects as inspection items. The eCAV system may then generate a characteristic accountability and verification document that lists each of these inspection items with their nominal values, plus/minus tolerances, units, critical-to-quality (CTQ) types, and other details suitable for use by an inspection operator and/or inspection system. The callouts may be stored alongside the model and may refer to certain modeled parts, thus keeping data relative to its original definition model.

Design models may then be further refined and added to via the execution of development/engineering processes 16. The development/engineering processes may, for example, create and apply models such as thermodynamic models, low cycle fatigue (LCF) life prediction models, multibody dynamics (MBD) and kinematics models, computational fluid dynamics (CFD) models, finite element analysis (FEA) models, and/or 3-dimension to 2-dimension FEA mapping models that may be used to predict the behavior of the part or product during its operation. For example, turbine blades may be modeled to predict fluid flows, pressures, clearances, and the like, during operations of a gas turbine engine. The development/engineering processes 16 may additionally result in the tolerances, materials specifications (e.g., material type, material hardness), clearance specifications, and the like, useful in manufacturing the part or product and stored in the PMI.

The CAx system 10 may additionally provide for manufacturing processes 18 that may include manufacturing automation support. For example, additive manufacturing models may be derived, such as 3D printing models for material jetting, binder jetting, vat photopolymerization, powder bed fusion, sheet lamination, directed energy deposition, material extrusion, and the like, to create the part or product. Other manufacturing models may be derived, such as computer numeric control (CNC) models with G-code to machine or otherwise remove material to produce the part or product (e.g., via milling, lathing, plasma cutting, wire cutting, and so on). Bill of materials (BOM) creation, requisition orders, purchasing orders, and the like, may also be provided as part of the manufacture processes 18 (or other PLM processes).

The CAx system 10 may additionally provide for verification and/or validation processes 20 that may include automated inspection of the part or product as well as automated comparison of specifications, requirements, and the like. In one example, a coordinate-measuring machine (CMM) process may be used to automate inspection of the part or product. The CMM process may be aided by the use of the eCAV system. For example, the eCAV system may automatically generate a CAV document that may then be used during inspection.

A servicing and tracking set of processes 22 may also be provided via the CAx system 10. The servicing and tracking processes 22 may log maintenance activities for the part, part replacements, part life (e.g., in fired hours), and so on. As illustrated, the CAx system 10 may include feedback between the processes 12, 14, 16, 18, 20, 22. For example, data from services and tracking processes 22, for example, may be used to redesign the part or product via the design processes 14. Indeed, data from any one of the processes 12, 14, 16, 18, 20, 22 may be automatically provided and used by any other of the processes 12, 14, 16, 18, 20, 22 to improve the part or product or to create a new part or a new product. In this manner, the CAx system 10 may incorporate data from downstream (or upstream) processes and use the data to improve the part or to create a new part.

The CAx system 10 may additionally include one or more processors 24 and a memory system 26 that may execute software programs to perform the disclosed techniques. Moreover, the processors 24 may include multiple microprocessors, one or more "general-purpose" microprocessors, one or more special-purpose microprocessors, and/or one or more application specific integrated circuits (ASICS), or some combination thereof. For example, the processors 24 may include one or more reduced instruction set (RISC) processors. The processors may additionally be included in a cloud-based system that provides for the processes 12, 14, 16, 18, 20, and 22 as cloud-based services. The memory system 26 may store information such as control software, look up tables, configuration data, etc. The memory system 26 may include a tangible, non-transitory, machine-readable medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof).

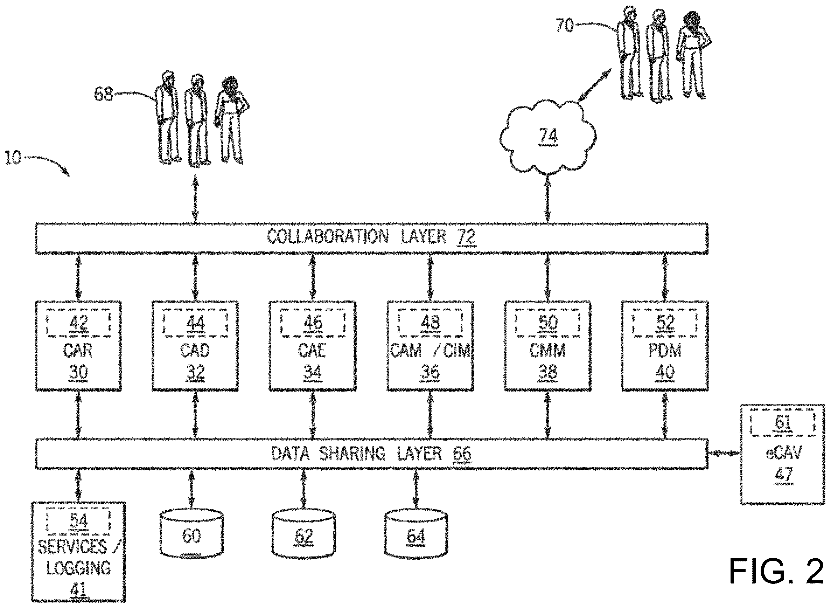

The memory system 26 may store a variety of information, which may be suitable for various purposes. For example, the memory system 26 may store machine-readable and/or processor-executable instructions (e.g., firmware or software) for the processors' 24 execution. In one embodiment, the executable instructions include instructions for a number of PLM systems, for example software systems, as shown in the embodiment of FIG. 2. More specifically, the CAx system 10 embodiment illustrates a computer-aided requirements capture (CAR) system 30, a computer-aided design (CAD) system 32, a computer-aided engineering (CAE) system 34, computer-aided manufacturing/computer-integrated manufacturing (CAM/CIM) system 36, a coordinate-measuring machine (CMM) system 38, and a product data management (PDM) system 40, a services/logging system 41, and an electronic characteristic accountability & verification (eCAV) system 47. Each of the systems 30, 32, 34, 36, 38, 40, 41, and 47 may be extensible and/or customizable; accordingly, each system 30 may include an extensibility and customization system 42, 44, 46, 48, 50, 52, 54, and 61, respectively. Additionally, each of the systems 30, 32, 34, 36, 38, 40, 41, and 47 may be stored in a memory system, such as memory system 26, and may be executable via a processor, such as via processors 24.

In the depicted embodiment, the CAR system 30 may provide for entry of requirements and/or specifications, such as dimensions for the part or product, operational conditions that the part or product is expected to encounter (e.g., temperatures, pressures), certifications to be adhered to, quality control requirements, performance requirements, and so on. The CAD system 32 may provide for a graphical user interface suitable to create and manipulate graphical representations of 2D and/or 3D models as described above with respect to the design processes 14. For example, the 3D design models may include solid/surface modeling, parametric models, wireframe models, vector models, non-uniform rational basis spline (NURBS) models, geometric models, and the like. The CAD system 32 may provide for the creation and update of the 2D and/or 3D models and related information (e.g., views, drawings, annotations, notes, and so on). Indeed, the CAD system 32 may combine a graphical representation of the part or product with other, related information.

The CAE system 34 may enable creation of various engineering models, such as the models described above with respect to the development/engineering processes 16. For example, the CAE system 34 may apply engineering principles to create models such as thermodynamic models, low cycle fatigue (LCF) life prediction models, multibody dynamics (MBD) and kinematics models, computational fluid dynamics (CFD) models, finite element analysis (FEA) models, and/or 3-dimension to 2-dimension FEA mapping models. The CAE system 34 may then apply the aforementioned models to analyze certain part or product properties (e.g., physical properties, thermodynamic properties, fluid flow properties, and so on), for example, to better match the requirements and specifications for the part or product.

The CAM/CIM system 36 may provide for certain automation and manufacturing efficiencies, for example, by deriving certain programs or code (e.g., G-code) and then executing the programs or code to manufacture the part or product. The CAM/CIM system 36 may support certain automated manufacturing techniques, such as additive (or subtractive) manufacturing techniques, including material jetting, binder jetting, vat photopolymerization, powder bed fusion, sheet lamination, directed energy deposition, material extrusion, milling, lathing, plasma cutting, wire cutting, or a combination thereof. The CMM system 38 may include machinery to automate inspections. For example, probe-based, camera-based, and/or sensor-based machinery may automatically inspect the part or product to ensure compliance with certain design geometries, tolerances, shapes, and so on.

The PDM system 40 may be responsible for the management and publication of data from the systems 30, 32, 34, 36, 38, 40, 41, and/or 47. For example, the systems 30, 32, 34, 36, 38, 40, 41, and 47 may communicate with data repositories 60, 62, 64 via a data sharing layer 66. The PDM system 40 may then manage collaboration between the systems 30, 32, 34, 36, 38, 40, 41, and 47 by providing for data translation services, versioning support, data archive management, notices of updates, and so on. The PDM system 40 may additionally provide for business support such as interfacing with supplier/vendor systems and/or logistics systems for purchasing, invoicing, order tracking, and so on. The PDM system 40 may also interface with the service/logging system 41 (e.g., service center data management systems) to aid in tracking the maintenance and life cycle of the part or product as it undergoes operations. Teams 68, 70 may collaborate with team members via a collaboration layer 72. The collaboration layer 72 may include web interfaces, messaging systems, file drop/pickup systems, and the like, suitable for sharing information and a variety of data. The collaboration layer 72 may also include cloud-based systems 74 or communicate with the cloud-based systems 74 that may provide for decentralized computing services and file storage. For example, portions (or all) of the systems 30, 32, 34, 36, 38, 40, 41, and 47 may be stored in the cloud 74, be executable in the cloud 74, and/or accessible via the cloud 74.

The eCAV 47 system may be used to create and/or update callouts (also known as balloons or bubbles) that get associated with specific PMI annotation objects. The callouts may include, for example, information useful for first article inspection (FAI). The information may thus include distances between edges, positions of holes, diameters and shapes of holes, weight, density, stiffness, color and/or surface finish information. The callout information may also include nominal values, plus/minus tolerances, units, critical-to-quality (CTQ) types, statistical process control (SPC) data, verification (VER) data, dimension type information (e.g., basic, circular, chamfer, degree, diameter, surface finish, radius, reference, surface of revolution, thread, and so on), tolerance type information (e.g., angularity, concentricity, flatness, non-SPC dimension, perpendicularity, parallelism, runout, surface or line profile, true position, and so on), notes, labels, feature control frames, tables, surface finishes, welds and regions, and so forth.

The callout information may be "linked" to the PMI objects and/or stored as an extension of the PMI objects. Accordingly, the CAV information may be stored and/or associated with the model (e.g., CAD model), thus keeping the CAV data relative to its definition model. In this manner, parts in the model may be redesigned or updated, and the CAV data associated with the parts may be similarly updated as needed. In some embodiments, the eCAV system 47 may be part of or subsystem of the CAD system 32.

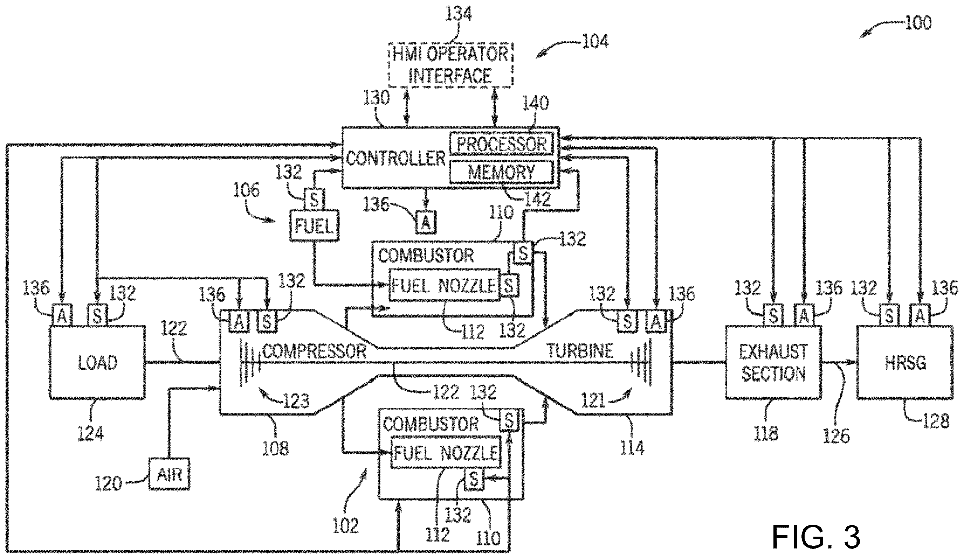

The services/logging system 41 may include shop systems that are used to service a variety of machinery, and that may thus log replacement of parts, track a specific part use in a specific device, track number of hours of use, track maintenance performed, and so on. In one embodiment, the services/logging system 41 may be fleet-based. That is, the services/logging system 41 may store and analyze data for a fleet of machinery, such as a fleet of power-production machinery described in more detail with respect to FIG. 3.

Once the design is updated, the part may then be manufactured and then inspected, for example via the CMM system 38. In one embodiment, the CMM system 38 may execute certain CMM inspection code For example, the code (e.g., dimensional measuring interface standard [DMIS] code, CALYPSO code) may include a set of locations on the part or product that the CMM system may inspect via a probe, a laser, a camera, and so on. The code may additionally include travel paths, a complete measurement plan, allowable variations, for example, in geometry, and so on. Results from the inspection may be used as input to the eCAV system 47. The eCAV system 47 may then automatically generate a first article inspection report and/or metrics detailing the measured geometries, position of holes, type of holes (e.g., through-holes, partial holes), hole depth, hole diameter, hole shape, distance between edges, surface finish, color, and so on.

The extensibility and customization systems 42, 44, 46, 48, 50, 52, 58 and 61 may provide for functionality not found natively in the CAR system 30, the CAD system 32, the CAM/CIM system 36, the CMM system 38, the PDM system 40, the services/logging system 41, and/or the eCAV system 47. For example, computer code or instructions may be added to the systems 30, 32, 34, 36, 38, 40, 41, and 47 via shared libraries, modules, software subsystems and the like, included in the extensibility and customization systems 42, 44, 46, 48, 50, 52, 54, and/or 61. The extensibility and customization systems 42, 44, 46, 48, 50, 52, 54, and 61 may also use application programming interfaces (APIs) included in their respective systems 30, 32, 34, 36, 38, 40, 41, and 47 to execute certain functions, objects, shared data, software systems, and so on, useful in extending the capabilities of the CAR system 30, the CAD system 32, the CAM/CIM system 36, the CMM system 38, the PDM system 40, the services/logging system 41, and/or the eCAV system 47. By enabling the processes 12, 14, 16, 18, 20, and 22, for example, via the systems 30, 32, 34, 36, 38, 40, 41, and 47 and their respective extensibility and customization systems 42, 44, 46, 48, 50, 52, 54, and 61, the techniques described herein may provide for a more efficient "cradle-to-grave" product lifecycle management.

An example machine that would incorporate one or more parts manufactured and tracked by the processes 12, 14, 16, 18, 20, and 22, for example, via the CAx system 10 is depicted in FIG. 3. FIG. 3 illustrates an example of a power production system 100 that may be entirely (or partially) conceived, designed, engineered, manufactured, serviced, and tracked by the CAx system 10. As illustrated in FIG. 3, the power production system 100 includes a gas turbine system 102, a monitoring and control system 104, and a fuel supply system 106. The gas turbine system 102 may include a compressor 108, combustion systems 110, fuel nozzles 112, a gas turbine 114, and an exhaust section 118. During operation, the gas turbine system 102 may pull air 120 into the compressor 108, which may then compress the air 120 and move the air 120 to the combustion system 110 (e.g., which may include a number of combustors). In the combustion system 110, the fuel nozzle 112 (or a number of fuel nozzles 112) may inject fuel that mixes with the compressed air 120 to create, for example, an air-fuel mixture.

The air-fuel mixture may combust in the combustion system 110 to generate hot combustion gases, which flow downstream into the turbine 114 to drive one or more turbine stages. For example, the combustion gases may move through the turbine 114 to drive one or more stages of turbine blades 121, which may in turn drive rotation of a shaft system 122. The shaft system 122 may additionally be coupled to one or more compressor stages having compressor blades 123. The shaft 122 may additionally connect to a load 124, such as a generator that uses the torque of the shaft 122 to produce electricity. After passing through the turbine 114, the hot combustion gases may vent as exhaust gases 126 into the environment by way of the exhaust section 118. The exhaust gas 126 may include gases such as carbon dioxide (CO2), carbon monoxide (CO), nitrogen oxides (NOx), and so forth.

The exhaust gas 126 may include thermal energy, and the thermal energy may be recovered by a heat recovery steam generation (HRSG) system 128. In combined cycle systems, such as the power plant 100, hot exhaust 126 may flow from the gas turbine 114 and pass to the HRSG 128, where it may be used to generate high-pressure, high-temperature steam. The steam produced by the HRSG 128 may then be passed through a steam turbine engine for further power generation. In addition, the produced steam may also be supplied to any other processes where steam may be used, such as to a gasifier used to combust the fuel to produce the untreated syngas. The gas turbine engine generation cycle is often referred to as the "topping cycle," whereas the steam turbine engine generation cycle is often referred to as the "bottoming cycle." Combining these two cycles may lead to greater efficiencies in both cycles. In particular, exhaust heat from the topping cycle may be captured and used to generate steam for use in the bottoming cycle.

In certain embodiments, the system 100 may also include a controller 130. The controller 130 may be communicatively coupled to a number of sensors 132, a human machine interface (HMI) operator interface 134, and one or more actuators 136 suitable for controlling components of the system 100. The actuators 136 may include valves, switches, positioners, pumps, and the like, suitable for controlling the various components of the system 100. The controller 130 may receive data from the sensors 132, and may be used to control the compressor 108, the combustors 110, the turbine 114, the exhaust section 118, the load 124, the HRSG 128, and so forth.

In certain embodiments, the HMI operator interface 134 may be executable by one or more computer systems of the system 100. A plant operator may interface with the industrial system 100 via the HMI operator interface 134. Accordingly, the HMI operator interface 134 may include various input and output devices (e.g., mouse, keyboard, monitor, touch screen, or other suitable input and/or output device) such that the plant operator may provide commands (e.g., control and/or operational commands) to the controller 130.

The controller 130 may include a processor(s) 140 (e.g., a microprocessor(s)) that may execute software programs to perform the disclosed techniques. Moreover, the processor 140 may include multiple microprocessors, one or more "general-purpose" microprocessors, one or more special-purpose microprocessors, and/or one or more application specific integrated circuits (ASICS), or some combination thereof. For example, the processor 140 may include one or more reduced instruction set (RISC) processors. The controller 130 may include a memory device 142 that may store information such as control software, look up tables, configuration data, etc. The memory device 142 may include a tangible, non-transitory, machine-readable medium, such as a volatile memory (e.g., a random access memory (RAM)) and/or a nonvolatile memory (e.g., a read-only memory (ROM), flash memory, a hard drive, or any other suitable optical, magnetic, or solid-state storage medium, or a combination thereof).

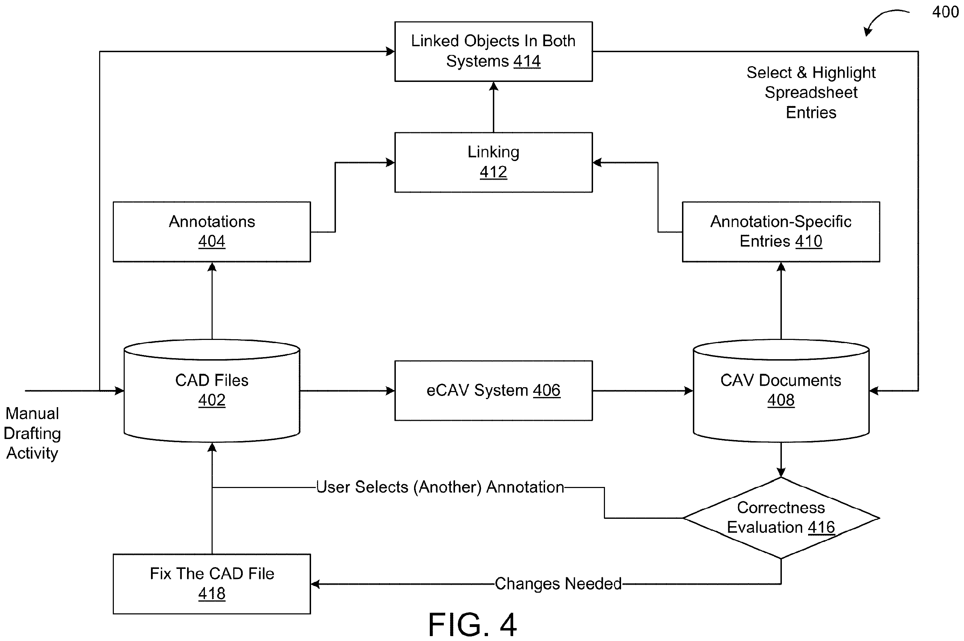

Turning now to FIG. 4, a flowchart 400 of an embodiment of a process suitable for incorporating one or more callouts (e.g., CAV data) into a CAD model is depicted. Manual drafting activity may be performed by a user. The manual drafting activity may be performed by an engineering using a CAD software or program to generate a CAD model. One or more CAD files 402 may be produced through the manual drafting activity. CAD file may comprise annotations 404, which may be in the form of balloons, dims, and so forth. In various embodiments, an eCAV system may be used to generate a CAV document that may then be used during inspection. The eCAV system 406 may be generated based on the CAD file. For example, the CAV document 408 may be a spreadsheet with validation data. CAV document 408 may be a spreadsheet document comprising a plurality of rows. Each row may be uniquely identified by an index number or identifier. A row of validation data corresponding to a part number may comprise a set of characteristics data, such as MBD/sheet, view/zone, and/or description information. A row of validation data may comprise critical-to-quality (CTQ) information. A row of validation data may comprise normal values, plus/minus tolerances, units of measure, statistical process control (SPC) data, verification (VER) data, dimension type information, tolerance type information, combinations thereof, and so forth. Annotation-specific entries 410 may be extracted from a CAV document 408, for example, as one or more rows of the spreadsheet.

Linking 412 of annotations 404 (e.g., dims, balloons) and annotation-specific entries may be performed through the use of a unique PMI identifier number that is constant through the existence of the object. Each PMI object may be assigned a unique identifier at creation, which exists and is constant over the entire lifetime of the object. Each inspection balloon may be assigned to a PMI object. A balloon number may be linked to an index number of the CAV document. This may, for example, be implemented in a spreadsheet as sequential numbers. In this way, and according to at least one embodiment, a triple relationship between PMI identifier, balloon, and spreadsheet rows is formed.

Once it is determined that linked objects are in both systems 414 - for example, through linking 412 to triple relationship between PMI identifier, balloon, and spreadsheet rows - spreadsheet entries may be selected and highlighted. For example, a user may have concurrently opened both a first application for CAD modeling and a second application opened to show CAV document 408. In some embodiments, when a balloon is selected in the CAD application, one or more corresponding rows of the opened spreadsheet document are opened, based on the links established through triple relationship between PMI identifier, balloon, and spreadsheet rows. For example, selection of one balloon in a CAD model may result in multiple spreadsheet rows being highlighted, visually depicting both the number of units expected as well as expected nominal dimensions, tolerances, and so forth.

A correctness evaluation 416 may be conducted based on validation data presented to a user. Highlighted rows of a CAV document 408 may indicate one or more expected values for various properties of a part or product, according to a specification or design. The correctness evaluation may involve the comparison of actual dimensions or values in a CAD file 402 as compared to expected dimensions or values in CAV document 408. If no changes are needed, the user may select another annotation (e.g., balloon) and the same process may be repeated, wherein for a second annotation or balloon, second linking information is used to identify a second set of rows of CAV document 408 that correspond to validation data for a second part or product. Users are able to visually compare expected output with CAD data in a straightforward and convenient manner.

In this way, an engineer is able to check every design feature with one click and compare it with external data (e.g., in the form of a spreadsheet listing all characteristics to be validated during inspection). Each row of a spreadsheet may represent a separate design feature, and the relevant rows to a particular selected design element may be selected dynamically as a user selects different balloons to inspect and/or validate. An engineer can perform inspections with greater speed and accuracy. An engineer can easily verify specific design features for all its definition attributes (e.g., tolerance, number of occurrences, etc.) by using selecting the relevant feature and then the expected values will be highlighted in a spreadsheet for every corresponding value in the CA system. Engineers can easily verify the values, its expected tolerances, and even the number of occurrences, based on the number of highlighted rows in the spreadsheet. If differences are detected, an engineer may take steps to fix the CAD file 418 to match the expected values, and so forth.

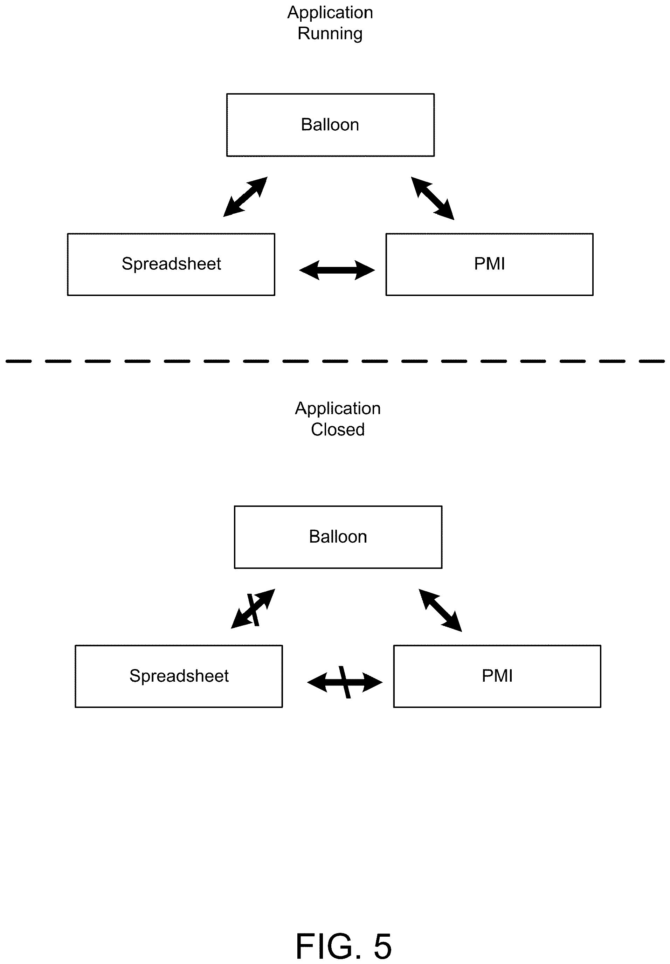

FIG. 5 is a block diagram of embodiments in which dynamic linking of balloon, spreadsheet, and PMI information is implemented. As depicted in FIG. 5, triple relationship between PMI identifier, balloon, and spreadsheet rows exists only when application is running. Balloon may be linked to PMI, balloon may be linked to spreadsheet, and spreadsheet may be linked to PMI. A balloon may have reference to a specific PMI identifier. A spreadsheet row may have a reference to a specific balloon number. However, the triple relationship may exist only when the application is running. For example, when the application is closed, links between the spreadsheet and the balloon and between the spreadsheet and the PMI may be broken (e.g., disassociated), as represented by the slashes in the lines between the balloon and spreadsheet as well as between the spreadsheet and PMI. In some embodiments, links may be broken (e.g., disassociated) when one or more of the CAD and/or spreadsheet applications is/are closed. The connection between the balloon and PMI may stay active, as these two objects are connected/associated with each other. The balloon will follow the PMI so that if a PMI object is moved to another place, the balloon follows as well. With this type of relationship the link between CAV spreadsheet data and CAD objects can be broken (e.g., disassociated) and restored, updated, etc. Objects are not tracked in real-time, which may be beneficial so as to not impede the designer's work.

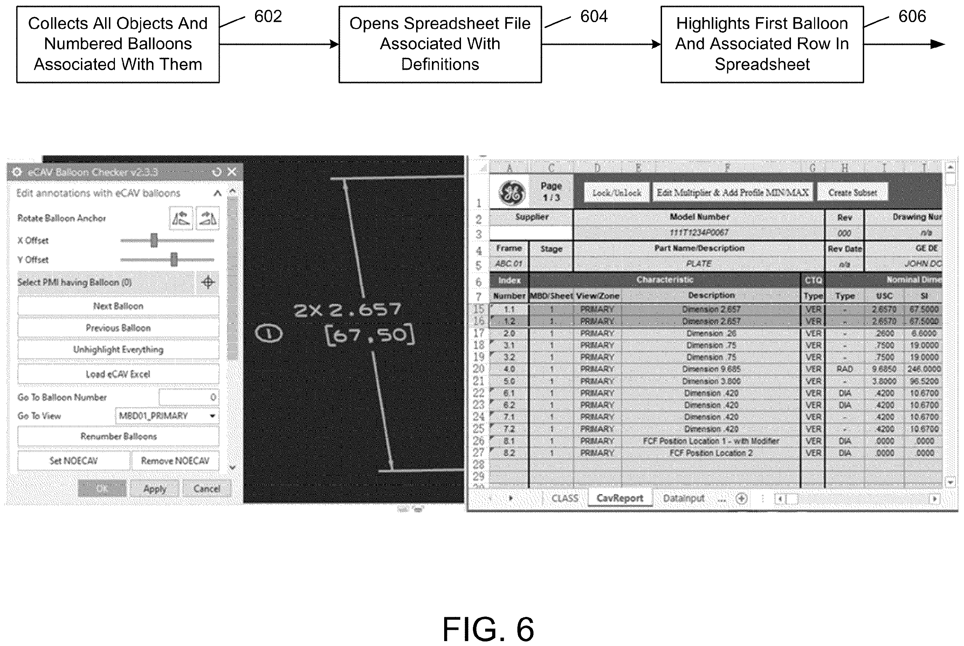

FIG. 6 is a first screenshot of an embodiment of a graphical user interface suitable for technical documentation review in CAD system with external validation data. FIG. 6 depicts an example embodiment in which a CAD application and spreadsheet application are concurrently opened in a side-by-side view. The CAD application may collect all objects and numbered balloons associated with them 602. Each balloon may be linked to or otherwise associated with a PMI object identifier. Each balloon may have a reference number. A system may be configured to open spreadsheet file associated with definition 604. The spreadsheet file may be generated by an eCAV application. The spreadsheet may comprise rows and may be linked to parts or components of the CAD model through a balloon number. The balloon number may be used to locate one or more rows of the spreadsheet that are associated with a balloon that is selected in the CAD model. When a CAD object is selected, the CAD system may highlight 606 the corresponding balloon in the CAD application as well as the associated rows in the spreadsheet, which may be identified by balloon number. In FIG. 6, balloon number 5 is selected in the CAD model, pointing on dimension 5.75 which occurs 2 times - therefore, in the spreadsheet, two rows are highlighted.

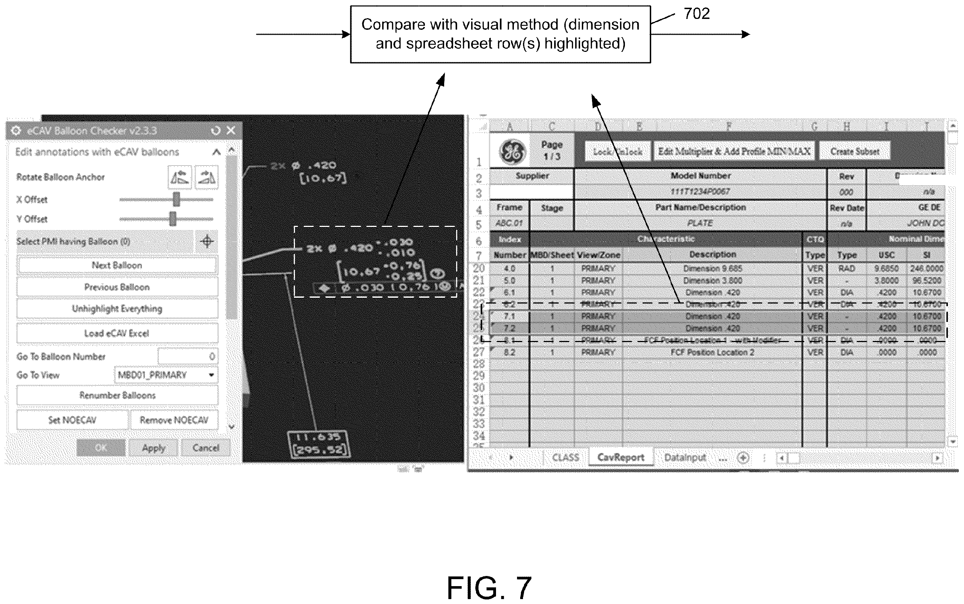

FIG. 7 is a second screenshot of an embodiment of a graphical user interface suitable for technical documentation review in CAD system with external validation data. FIG. 7 depicts an example in which a numbered balloon is selected and corresponding rows of a spreadsheet highlight validation data for the part of feature selected in the CAD system. An engineer may compare with visual method the dimensions and spreadsheet rows highlighted 702. The spreadsheet may include validation data comprise at least one of: nominal values, plus/minus tolerances, units of measure, critical-to-quality (CTQ) types, statistical process control (SPC) data, verification (VER) data, dimension type information, and tolerance type information. The validation data may be compared against the actual CAD model data to ensure that the parts are designed accordingly.

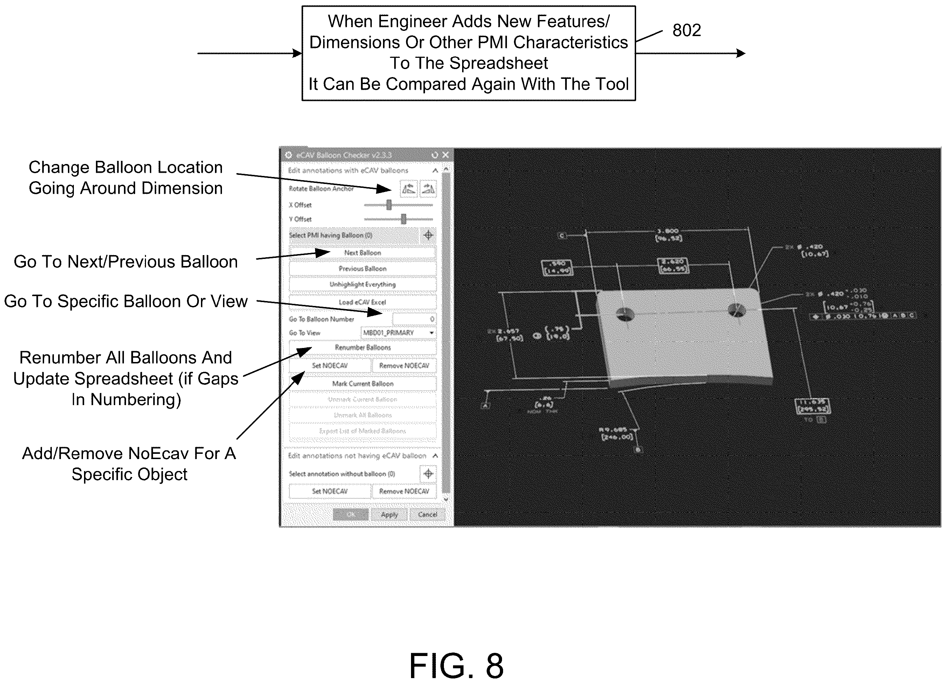

FIG. 8 is a third screenshot of an embodiment of a graphical user interface suitable for technical documentation review in CAD system with external validation data. The link between CAD objects and CAV validation data can be broken (e.g., disassociated) and dynamically re-linked (e.g., re-associated). For example, when 802 engineer adds new features/dimensions or other PMI characteristics to the spreadsheet, it can be compared again with the tool. Entry of validation data to the spreadsheet may be used to break and/or update links between balloons and PMI objects. Balloons and PMI objects may be associated and disassociated. A CAD system may have graphical interfaces for changing balloon location going around dimension, go to next or previous balloon, go to specific balloon or view, renumbering balloons and updating spreadsheet to eliminate gaps in numbering, and so forth.

It will be appreciated that the above numerical values are merely intended to help illustrate the working of the invention and may vary.

The listing or discussion of apparently prior-published document or information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

### Reference numbers:

- 10 -: computer-aided technologies (CAx) system
- 12 -: conception processes
- 14 -: design processes
- 16 -: development / engineering processes
- 18 -: manufacture processes
- 20 -: validation processes
- 22 -: servicing and tracking processes
- 24 -: processors
- 26 -: memory system
- 30 -: computer-aided requirements capture (CAR) system
- 32 -: computer-aided design (CAD) system
- 34 -: computer-aided engineering (CAE) system
- 36 -: computer-aided manufacturing/computer-integrated manufacturing (CAM/CIM) system
- 38 -: coordinate-measuring machine (CMM) system
- 40 -: product data management (PDM) system
- 41 -: service/logging system
- 42 -: extensibility and customization system
- 44 -: extensibility and customization system
- 46 -: extensibility and customization system
- 47 -: electronic characteristic accountability & verification (eCAV) system
- 48 -: extensibility and customization system
- 50 -: extensibility and customization system
- 52 -: extensibility and customization system
- 54 -: extensibility and customization system
- 60 -: data repository
- 61 -: extensibility and customization system
- 62 -: data repository
- 64 -: data repository
- 66 -: data sharing layer
- 68 -: team
- 70 -: team
- 72 -: collaboration layer
- 74 -: cloud-based systems
- 100 -: power production system
- 102 -: gas turbine system
- 104 -: monitoring and control system
- 106 -: fuel supply system
- 108 -: compressor
- 110 -: combustion systems
- 112 -: fuel nozzles
- 114-: gas turbine
- 118 -: exhaust section
- 120 -: air
- 121 -: turbine blades
- 122 -: shaft system
- 123 -: compressor blades
- 124: - load
- 126 -: exhaust gas
- 128 -: heat recovery steam generation (HRSG) system
- 130 -: controller
- 132 -: sensors
- 134 -: human machine interface (HMI) operator interface
- 136 -: actuators
- 140 -: processor(s)
- 142 -: memory device
- 400 -: flowchart
- 402 -: CAD files
- 404 -: annotations
- 406 -: eCAV system
- 408 -: CAV documents
- 410 -: annotation-specific entries
- 412 -: linking
- 414 -: linking objects in both systems
- 416 -: correctness evaluation
- 418 -: fix the CAD file
- 602 -: collects all objects and numbered balloons associated with them
- 604 -: opens spreadsheet file associated with definitions
- 606 -: highlights first balloon and associated row in spreadsheet
- 702 -: compare with visual method
- 802 -: compared against with the tool

## Claims

1. A system, comprising:
at least one processor; and
memory storing instructions configured to cause the at least one processor to:
determine a first identifier for first product and manufacturing information (PMI);
determine a first computer-aided design (CAD) model, wherein the CAD model comprises a model of a component or part thereof having a plurality of features;
associate a second identifier of a first feature of the plurality of features with the first identifier;
associate validation data for the first PMI with the second identifier;
determine selection of the first feature in the CAD model; and
provide a graphical indication of the validation data based at least in part on the selection of the first feature.

2. The system of claim 1, wherein the instructions are configured to further cause the at least one processor to:
perform a correctness evaluation by comparing one or more characteristics of the first feature with one or more expected characteristics of the validation data; and
identify at least one deficiency in the one or more characteristics based on the correctness evaluation.

3. The system of claim 2, wherein the instructions are configured to further cause the at least one processor to update the at least one deficiency based on the one or more expected characteristics.

4. The system of claim 1, wherein the instructions are configured to further cause the at least one processor to disassociate the validation data from the first feature.

5. The system of claim 4, wherein the instructions are configured to further cause the at least one processor to associate the validation data with a third identifier.

6. The system of claim 1, wherein:
a CAD application is used to perform the selection of the first feature in the CAD model; and
a spreadsheet application is used to provide the graphical indication of the validation data.

7. The system of claim 6, wherein the validation data is displayed as one or more highlighted rows of the spreadsheet application.

8. The system of claim 1, wherein the validation data comprise at least one of: nominal values, plus/minus tolerances, units of measure, critical-to-quality (CTQ) types, statistical process control (SPC) data, verification (VER) data, dimension type information, and tolerance type information.

9. The system of claim 1, wherein:
the first feature comprises a plurality of units; and
the validation data comprises corresponding a plurality of validation data rows.

10. The system of claim 1, wherein association of the first feature with the first identifier cannot be modified subsequent to creation of the first feature.

11. The system of claim 1, wherein the instructions are configured to further cause the at least one processor to:
close a spreadsheet application that is operable to provide the graphical indication of the validation data;
update contents of the validation data, thereby generating updated validation data;
open the spreadsheet application;
detect selection of the first feature in the CAD model; and
in response to the detected selection, provide a second graphical indication of the validation data.

12. The system of claim 1, wherein the instructions are configured to further cause the at least one processor to generate the validation data using an electronic characteristic accountability and verification (eCAV) application.

13. The system of claim 1, wherein the instructions are configured to further cause the at least one processor to:
associate a second feature of the plurality of features with a third identifier for second PMI, wherein the second feature is identified by a fourth identifier; and
associate second validation data for the second PMI with the fourth identifier.

14. The system of claim 1, wherein the instructions are configured to further cause the processor to concurrently display the first feature and the validation data.

15. A computer-implemented method, comprising:
determining a first identifier for first product and manufacturing information (PMI);
determining a first computer-aided design (CAD) model comprising a plurality of features;
associating a first feature of the plurality of features with the first identifier, wherein the first feature is identified by a second identifier;
associating validation data for the first PMI with the second identifier;
detecting selection of the first feature in the CAD model; and
in response to the detected selection, providing a graphical indication of the validation data.
